(19) Europäisches Patentamt
European Patent Office
Office européen des brevets

(11) Publication number: 0 024 192
B1

(12) EUROPEAN PATENT SPECIFICATION

(45) Date of publication of patent specification: 09.03.83

(51) Int. Cl.$^3$: G 01 N 27/30

(21) Application number: 80302774.7

(22) Date of filing: 12.08.80

# (54) Silver/silver halide electrodes and process for preparing same.

(30) Priority: 13.08.79 US 66123

(43) Date of publication of application:
25.02.81 Bulletin 81/8

(45) Publication of the grant of the patent:
09.03.83 Bulletin 83/10

(84) Designated Contracting States:
CH DE FR GB IT LI NL SE

(56) References cited:
DE - A - 2 558 947
DE - A - 2 722 617
DE - B - 1 275 793
GB - A - 1 257 437
US - A - 3 578 578
US - A - 3 591 482

(73) Proprietor: EASTMAN KODAK COMPANY
343 State Street
Rochester, New York 14650 (US)

(72) Inventor: Rasch, Arthur Allyn
Kodak Park
Rochester New York (US)
Inventor: Searle, Roger
Kodak Park
Rochester New York (US)

(74) Representative: Pepper, John Herbert et al.
KODAK LIMITED Patent Department P.O. Box 114
190 High Holborn
London WC1V 7EA (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Silver/silver halide electrodes and process for preparing same

The present invention relates to silver/silver halide electrodes.

The use of electrochemical cells for the measurement of the concentrations of electrolytes in ionic solutions is widespread. Typically, devices for obtaining such measurements include:

(1) metal/metal salt electrodes which can be either

A. metal/metal halide electrodes useful for the measurement of halide ion, e.g. chloride or bromide, or
B. reference electrodes useful in the measurement of ions other than halide, wherein the anion of the metal salt can be other than halide;

(2) reference elements that comprise a reference electrode in contact with an electrolyte, i.e. a second salt containing the anion of the metal salt; and

(3) ion-selective electrodes that comprise reference elements covered by a membrane comprising an ionophore, a carrier solvent, and a hydrophobic binder.

When simultaneously contacted with a solution to be analyzed, the reference element and the ion-selective electrode, in combination, constitute an electrochemical cell, across which a potential develops. Measurement of the potential determines the concentration of ions in solution.

A very commonly used example of such a reference element for use with an ion-selective electrode can be represented as

AgAgCl/"X<u>M</u>Cl$^-$"

(XMCl$^-$ indicating a solution of known Cl$^-$ concentration) and comprises a silver wire having a coating of silver chloride dipped into an aqueous solution of known chloride concentration.

The metal salt layer of the metal/salt electrode is conventionally coated on the metal substrate by contacting the metal substrate with an oxidizing agent in the presence of the appropriate anion. In the case of the reference element, this is done prior to overcoating the reference electrode with an electrolyte layer.

In DE—A1 2,722,617, a reference element is described that is formed by coating a support, such as polyethylene terephthalate, with a metallic silver layer, such as by plating techniques, and treating the silver layer overall with an oxidizing agent or a silver halide emulsion and drying. The surface of the silver layer is thus converted to or coated by silver halide. The layer is dried and the silver halide layer is overcoated with an electrolyte layer comprising the electrolyte and a hydrophilic binder. The resulting reference element is a substrate overall coated with a silver layer, overall coated with a silver halide layer, and overall coated with the electrolyte layer. A membrane layer is added resulting in an ion-selective electrode. The circuit is completed with a probe that penetrates the silver halide layer to contact the silver layer for electrical contact.

Although the above method results in an acceptable ion-selective electrode, the electrical contact of the probe with the silver layer is not always good, as the probe must be forced through the silver halide layer to make contact with the silver layer.

According to the present invention, there is provided a process for preparing a silver/silver halide electrode characterised by partially coating silver with nickel, chromium, or an alloy of nickel and chromium and overall treating the partially coated surface of the silver with an oxidizing agent in the presence of halide ions.

This process protects the silver areas under the nickel, chromium, or alloy of nickel and chromium from undesirable oxidation while forming an oxidized silver layer, i.e. a silver halide layer, in uncovered areas. Electrical contact can therefore be made directly with the metal coating without interference from the silver halide layer.

According to the present invention there is also provided a silver/silver halide electrode including a support having coated thereon a layer of silver, characterised by portions of the layer of silver having coated thereon a layer of nickel, chromium, or alloy of nickel and chromium, the portions of silver layer not so coated having thereon a layer of silver halide.

According to the present invention, there is further provided a silver/silver halide reference element characterised by the silver/silver halide electrode as set out in the immediately preceding paragraph wherein the layer of silver halide has thereon a second layer comprising a metal salt.

According to the present invention there is still further provided an ion-selective electrode characterised by the silver/silver halide reference element as set out in the immediately preceding paragraph wherein the second layer comprising a metal salt has thereon a third layer comprising a membrane comprising an ionophore, a carrier solvent and a hydrophobic binder. The membrane layer is useful in electrodes that measure ions, such as potassium and carbonate.

According to the present invention, there is still further provided a halide sensitive electrode characterised by the silver/silver halide electrode according to the present invention as described above overcoated with a polymeric layer. The polymer layer reduces interference from other halide ions and uric acid.

The present invention will now be described

by way of example, with reference to the accompanying drawings, in which:—

Fig. 1 is a cross-section through an electrode according to the present invention; and

Fig. 2 is a cross-section through an ion-selective electrode according to the present invention.

The silver mentioned above can either be self-supported or coated as a layer on a support. Suitable supports are preferably insulators and include glass, paper, and polymers, such as polyesters, e.g. polyethylene terephthalate and cellulose esters.

The silver layer can be formed *in situ* or applied to a support using any suitable means for depositing silver. The silver layer, which is preferably thin, can be formed, for example, by electroless deposition, vapour deposition in vacuum, or deposition of a photographic silver halide layer that is then exposed and developed.

Portions of the silver are then coated with chromium, nickel, or an alloy of chromium and nickel.

The metal can be applied to the silver using any conventional technique. It is applied, however, to only a portion of the silver, leaving the remainder uncoated. In a preferred embodiment, the metal is applied in stripes to the silver by vapour deposition in vacuum. The desired pattern is formed by placing a mask between the vapour source and the silver, using methods well known in the art, so that only clearly delineated areas are covered with the protective chromium, nickel, or alloy of chromium and nickel.

The chromium, nickel, or alloy of chromium and nickel prevents the underlying silver from reacting with the oxidizing agent to form silver ion. These metals are good electrical conductors and they react very slowly, if at all, with the oxidizing agents. As a result, direct electrical contact can be made to the underlying silver layer without the necessity of first mechanically penetrating an electrically resistive silver halide layer. In this way, the reliability of the electrode made from this method is improved.

The chromium, nickel, or chromium-nickel alloy films can be very thin. For example, films 5 nm (50 Å) thick are found to prevent reaction of the silver with the oxidizing agent.

The nickel, chromium, or chromium-nickel alloy protective films provide good electrical contact and protect the underlying silver from the oxidizing agent. In addition, they do not appreciably accelerate the reaction of immediately adjacent unprotected silver with the oxidizing agent. Thin films of other metals fail to protect the underlying silver from the oxidizing agent, fail to provide good electrical contact, or cause the silver layers in the areas adjacent to the protective metal, even as far as 2 mm away, to react more rapidly than the remainder of the silver layer. Reaction rates at these areas can accelerate more than twofold with the result that the silver in these areas is etched through and electrical continuity in the silver layers is lost.

The partially coated silver is then overall coated or treated with a composition comprising an oxidizing agent (and halide ions if the oxidizing agent does not contain them) that produces the silver halide layer on the unprotected silver. The oxidizing agent can be applied to the silver using any conventional techniques, such as roll coating, dipping, laminating, or brush coating. The oxidizing agent can be in a solution such as an acid solution, e.g. hydrochloric acid, containing the oxidizing agent.

Examples of useful oxidizing agents include $KCrO_3Cl$, $K_3Fe(CN)_6$, $KMnO_4$, $K_2Cr_2O_7$, $NH_4VO_3$, $(NH_4)_2Ce(NO_3)_6$, and $Fe_2(C_2O_4)_3$. Preferred oxidizing agents are $KCrO_3Cl$ and $K_3Fe(CN)_6$. Combinations of oxidizing agents can be used. A more thorough listing of oxidizing agents useful herein can be found in *Handbook of Chemistry and Physics*, 50th Edition, The Chemical Rubber Company, 1969, pp D109—114.

The amount of oxidizing agent used can vary depending on its oxidizing power, but, preferably, the coverage should be between 0.01 and 2.0 g/m$^2$.

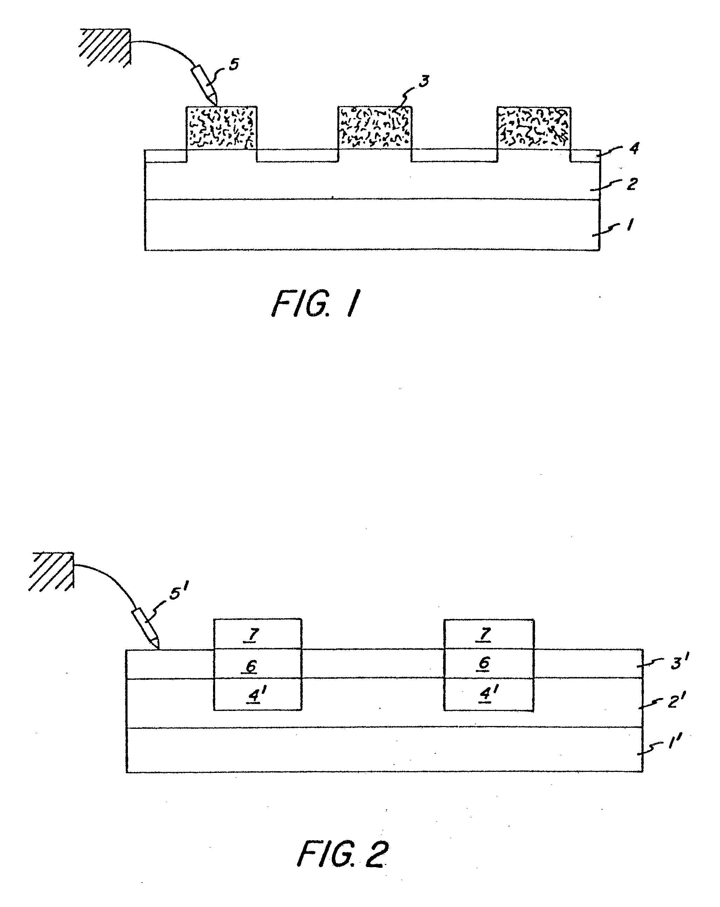

Thus, as seen in Figure 1, a typical manufacturing procedure for an electrode will involve applying in striped fashion layers 3 of chromium, nickel, or an alloy of chromium and nickel to a layer of silver 2 vacuum-deposited on a polyethylene terephthalate support 1 and treating with an oxidizing agent in the presence of halide ion to form silver halide layers 4 in only those unprotected areas of the silver layer and making an ohmic contact with the underlying silver layer with a probe 5 by connecting to the layers 3.

A reference element can be obtained by coating only the silver halide areas with a metal salt electrolyte. The coating composition can additionally contain a hydrophilic binder. Typically, the binder and salt are in solution with a solvent for both. In a preferred embodiment, one of the ions of the metal salt electrolyte comprises the ion that the ion-selective electrode is designed to detect. For example, in a potassium ion-selective electrode that uses AgCl as the insoluble metal salt, potassium chloride is a logical choice although sodium chloride can also be used. For sodium ion determinations in a similar configuration, sodium chloride would be useful. Thus, the salt will generally be a water-soluble salt having a cation selected from ammonium, alkali metals, alkaline earth metals, and mixtures thereof, and a halide, a carbonate, a sulphur-containing anion, or any other suitable anion to which the electrode responds, depending upon the composition of the metal-salt layer.

The binder for the metal salt electrolyte can be any hydrophilic material suitable for the formation of continuous, coherent, cohesive layers compatible with the salt of the electrolyte layer and, if present, the solvent.

Preferred materials of this type are hydrophilic, natural and synthetic film-forming polymers, such as polyvinyl alcohol, gelatin, agarose, polyacrylamide, polyvinyl pyrrolidone, poly(hydroxyethyl acrylate), poly(hydroxyethyl methacrylate), and polyacrylic acid. Specifically preferred are the hydrophilic colloids, such as gelatin (especially deionized gelatin), agarose, polyvinyl alcohol and poly(hydroxyethyl acrylate).

In the case of a silver/silver halide electrode to be used directly to determine ions such as $Cl^{\ominus}$ and $Br^{\ominus}$, no electrolyte layer is needed. For an ion-selective electrode for determining $K^+$, $CO_3^=$ and the like, the composition to be coated over the silver chloride layer can generally contain from 0.1 to 7.5 g/m$^2$ of metal salt and from 0.5 to 10 g/m$^2$ of hydrophilic binder. Salt concentrations of from 30% to 50% by weight of the binders in the layer are preferred.

The coating composition can also contain other addenda, such as surfactants, for example, saponin (*p*-isononyl phenoxy polyglycidol) and Surfactant 10G (a nonionic surfactant made by the Olin Corporation) and buffering agents, such as phosphates and acetic acid.

Appropriate solvents for the polymeric binder and metal salt electrolyte will depend largely on the nature of the polymer and the salt. Generally, polar solvents suitable for dissolving the salt and the polymer are satisfactory. Thus, water is a preferred solvent for hydrophilic materials, such as polyvinyl alcohol and gelatin.

Since the thickness of the metal salt layer will, to some extent, determine the response characteristics of the electrode, it is desirable to keep the layer thin. Thicknesses of the order of from 2.5 to 13 $\mu$m (0.1 to 0.5 mil) have been found useful. A preferred thickness is 5 $\mu$m (0.2 mil). Of course, where electrode response characteristics are not critical, the permissible thickness range can be outside these limits.

The electrodes can comprise the reference element described above in a conventional electrode containing a reference solution such as a barrel electrode or can be in the form of a dry operative electrode (both as described in *Research Disclosure* 16113, published by Industrial Opportunities Limited, Homewell, Havant, Hampshire, P09 1EF, UK, Volume 161, September, 1977). Solution assays can be carried out, for example, using barrel type electrodes containing electrode bodies having therein a membrane. The sample is brought into contact with the membrane and a reference electrode is inserted into the electrode body.

The reference elements described above can be useful in dry operative ion-selective electrodes, which require a membrane layer containing an ionophore.

Dry operative electrodes are described in DE—OS 2,722,617 and include a dried reference electrode layer coated with a metal salt layer and a membrane layer.

The membrane of the electrode designed to measure potassium, sodium, $CO_2$, and other ions requiring a membrane can be coated over the reference element by any means, such as roll coating or dip coating.

Among the patents and publications that describe ion-selective membranes of the type useful in the present invention are:

U.S. 3,562,129;
U.S. 3,753,887;
U.S. 3,856,649;
U.K. 1,375,446;
DEOS 2,251,287;

W. E. Morf, G. Kohr and W. Simon, "Reduction of the Anion Interference in Neutral Carrier Liquid-Membrane Electrodes Responsive to Cations," *Analytical Letters*, Volume 7, No. 1, pages 9 to 22 (1974);

W. E. Morf, D. Ammann, E. Pretsch and W. Simon, "Carrier Antibiotics and Model Compounds as Components of Ion-Sensitive Electrodes," *Pure and Applied Chemistry*, Volume 36, No. 4, pages 421 to 439 (1973);

D. Ammann, E. Pretsch and W. Simon, "Sodium Ion-Selective Electrode Based on a Neutral Carrier," *Analytical Letters*, Volume 7, No. 1, pages 23 to 32 (1974);

R. W. Cattrall and H. Freiser, *Analytical Chemistry, 43,* 1905 (1971); and

H. James, G. Carmack and H. Freiser, *Analytical Chemistry, 44,* 856 (1972).

Membranes of this type are well known. Such membranes generally include an inert hydrophobic binder or matrix having dispersed therein an ion carrier or selector, commonly referred to as an ionophore, that imparts selectivity to the membrane. These membranes can also contain a carrier solvent for the ionophore to provide adequate ion mobility in the membrane. The carrier solvent can also serve as a plasticizer for the hydrophobic binder.

These binders, ion carriers, and carrier solvents can be those described in DE—OS 2,722,617.

The ion-selective electrodes can be manufactured by dipping a conductive wire sequentially into the reference composition and the composition containing the membrane; or a dry operative electrode can be prepared as shown in Figure 2 by coating, laminating or otherwise applying the individual layers one over another to form a planar, multilayer electrode structure. In Figure 2, the support 1′ is coated with a silver layer 2′, stripe coated with nickel, chromium, or alloys of chromium with nickel 3′, and treated with an oxidizing agent in the presence of halide ion to form a silver halide layer 4′ in the unprotected areas. The silver halide layers are then overcoated with an electrolyte layer 6 and a membrane layer 7. A probe 5′ is brought into contact with the nickel (or chromium, etc.) layer.

The ion selectivity of membrane electrodes can be observed by measuring a steady-state difference in electrical potential between reference solutions and sample solutions, as described in DE—OS 2,722,617.

For use as an electrode to detect halide ions, such as chloride or bromide ions, the reference electrode can be overcoated with a polymeric layer to reduce any interference from other halide ions, uric acid and the like. Such polymers are described in European Patent Application No. 79200599.3. Preferred overcoats include cellulose acetate containing an acetyl content of from 36.5 to 40 weight percent.

The following examples further demonstrate the successful practice of the present invention.

Example 1

A silver film on a polyethylene terephthalate support was prepared by vapour deposition in vacuum. Silver metal was placed in the crucible of an electron beam-heated vapour source, the vacuum chamber was closed, and the pressure was reduced to 6.7 mPa ($5\times10^{-5}$ Torr). The silver was heated in the electron beam of the vapour source to a point where it had melted and was evaporating at a high rate. The support was drawn through the vapour beam at a rate such that the silver that condensed on the support formed a film approximately 0.25 μm (2500 Å) thick.

Samples of the silver-coated support were attached to masks such that 8 mm wide stripes of the silver film were left exposed. The masked samples were placed in a bell jar vacuum system approximately 3.8 dm (15 inches) from an electron beam-heated vapor source. Gold splatters were placed in the crucible of the vapour source and the chamber was pumped down to a pressure of about 6.7 mPa ($\sim5\times10^{-5}$ Torr). The gold was heated to the point of evaporation, the vapour condensing on the exposed areas of the silver film to form a film 50 nm (500 Å) thick.

The pressure in the vacuum system was raised to ambient pressure. The samples were removed and replaced by masked, uncoated samples of silver film. The process was repeated and chromium metal stripes 50 nm (500 Å) thick were deposited on the support instead of gold.

A portion of each striped silver film was bathed in a solution consisting of:

| | |
|---|---|
| Potassium dichromate | 10.1 g |
| Potassium chloride | 15.4 g |
| Hydrochloric acid, 6N | 25 ml |
| Water to | 1 litre |

for 15 seconds at 23°C. The samples were removed, rinsed with water, and dried. In both cases there was no visible reaction with the protective metal stripe or with the underlying silver film and the surface of the unprotected silver film was converted to silver chloride. In the case of the film protected with gold, all of the silver immediately adjacent to the stripes was converted. As a result, electrical continuity was lost between the stripes. The exposed silver on the sample protected with chromium stripes reacted uniformly and the electrical resistance between adjacent stripes was less than 1 ohm.

Example 2

A silver film on a polyethylene terephthalate support was overcoated with chromium film in a pattern of stripes using the same process described in Example 1. The chromium was deposited at three thicknesses: 26 nm, 14 nm, and 6 nm (260 Å, 140 Å, and 60 Å). Samples of all coatings were oxidized as in Example 1 for times ranging from 45 seconds to 180 seconds at 23°C. The films were then rinsed in water and dried.

In each case the unprotected silver appeared to react uniformly with the solution to form silver chloride. Neither the chromium stripes nor the underlying silver reacted with the solution. After removing the silver chloride with ammonia solution, analysis showed that up to 50 percent of the unprotected silver had been converted. No adjacency effects were found and the rate of reaction of the silver with the solution was uniform over the whole area of the exposed silver film. This example demonstrates that very thin films of chromium, i.e. 6 nm, (60 Å) are as effective as chromium films considerably thicker in protecting the silver film.

Example 3

A silver film on a polyethylene terephthalate support was overcoated with nickel in a pattern of stripes using the same process described in Example 1. The nickel was deposited in three thicknesses: 26.5 nm, 13 nm, and 5.3 nm (265 Å, 130 Å, and 53 Å). The samples were oxidized as in Example 1 for 2 minutes at 23°C, rinsed in water, and dried. In each case the unprotected silver appeared to react uniformly with the solution while the nickel stripes and the underlying silver showed no sign of reaction.

The material overcoated with 5.3 nm (53 Å) of nickel was used to make a series of electroanalytical cells. These were used in an instrument in which the electrical contacts were modified and made smooth so that they did not abrade or pierce the contact area on the cell. In a typical test using standard solutions, voltage measurements on the cells averaged $12.34\pm0.24$ millivolts. In a similar test with sharp, piercing contacts using cells made from materials not having protected contact areas, the average of voltage measurements was $12.94\pm.17$ millivolts. This example demonstrates that good precision can be obtained using materials that have protected, metallic areas and nonpenetrating electrical contacts. This aids in eliminating the problems that are introduced when sharp, penetrating contacts wear and become less effective.

Example 4

A silver film on a polyethylene terephthalate support was prepared as described in Example 1. Samples of this silver coating were used to prepare materials with various metal overcoats by the method described in Example 1.

The following coatings were prepared:

| Example | Metal film overcoat | Overcoat thickness (nm) |
|---|---|---|
| 4a | Nickel | 6.0 (60 Å) |
| 4b | Chromium | 17.0 (170 Å) |
| Control A | Zinc | 7.5 (75 Å) |
| Control B | Lead | 6.0 (60 Å) |
| Control C | Copper | 12.0 (120 Å) |
| Control D | Aluminium | 12.0 (120 Å) |
| Control E | Cobalt | 10.0 (100 Å) |
| Control F | Tin | 13.0 (130 Å) |

All materials were oxidized as in Example 1 for 3 minutes at 25°C, rinsed, and dried. The nickel and chromium films did not react with the solution and prevented the underlying silver from reacting also. It was found in this case that the rate of reaction of the silver was slightly greater in areas immediately adjacent to the nickel film, but not to the extent that all of the silver layer reacted. Thus, electrical continuity was maintained.

The zinc, lead, copper, and aluminium films all reacted with the solution and did not protect the underlying silver from reacting with the solution also. The cobalt film partially protected the silver, but in areas where reaction did occur within the cobalt stripe, the cobalt was undercut and tended to slough off, exposing silver to the solution.

The tin also afforded a degree of protection to the underlying silver, but reacted slowly with the solution to form a salt on its surface. This caused an increase in electrical contact resistance. At the same time, there was a pronounced increase in the rate of reaction of the silver in areas immediately adjacent to the edge of the tin film.

This example illustrates the clear and unusual superiority of nickel and chromium films over other metal films in their ability to protect silver from reaction with corrosive solutions.

Example 5

An arrangement for producing striped coatings consisting of an electron beam-heated vapour source, a water-cooled chimney mounted above the source, and a slotted mask and support guide mounted to the top of the chimney at a distance of approximately 6.1 dm (24 inches) from the vapour source was installed in a coating machine. A roll of polyethylene terephthalate, previously coated with silver by the process described in Example 1, was loaded into the machine and threaded through a guide on the stripe mask. The crucible in the vapour source was charged with pure nickel rod. The chamber was closed, pumped down to a pressure less than 6.7 mPa ($<5\times10^{-5}$ Torr), and the nickel was melted in the vapour source. When nickel was evaporating at a high rate and condensing on the silver surface, the support was drawn through the mask at a rate sufficient to cause parallel stripes of nickel film to be deposited on the silver at a thickness of about 13 nm (~130 Å). After the full roll of support was coated, the evaporation was stopped, the chamber pressure was raised to ambient pressure, and the roll was removed. The material was then oxidized with a solution similar to the formula of Example 1, converting only the surface of the silver in the unprotected areas to silver chloride. The converted areas were subsequently overcoated with a cellulose acetate polymer containing with a cellulose acetate polymer containing a 36.5 to 40.0 percent acetyl content and the finished material fabricated into slides for measuring chloride ion concentrations in blood serum. Several hundred slides were tested, as were an equal number of slides in which the contact area had not been protected, using the same analytical instrument. No test failures due to poor contact occurred using the slides with contact areas protected with nickel, while a small, but significant, number of contact failures occurred with the slides having unprotected contact areas.

**Claims**

1. A process for preparing a silver/silver halide electrode characterised by partially coating silver with nickel, chromium, or an alloy of nickel and chromium and overall treating the partially coated surface of the silver with an oxidizing agent in the presence of halide ions.

2. The process of claim 1 wherein the oxidizing agent is $KCrO_3Cl$, $K_3Fe(CN)_6$, $KMnO_4$, $K_2Cr_2O_7$, $NH_4VO_3$, $(NH_4)_2Ce(NO_3)_6$ or $Fe_2(C_2O_4)_3$.

3. The process of claim 1 or 2 wherein the silver is a layer coated on a support.

4. A silver/silver halide electrode including a support (1) having coated thereon a layer of silver (2), characterised by portions of the layer of silver having coated thereon a layer (3) of nickel, chromium, or alloy of nickel and chromium, the portions of silver layer not so coated having thereon a layer (4) of silver halide.

5. The electrode of claim 4 wherein the layer (3) of nickel, chromium, or alloy of nickel and chromium is coated on the silver (2) in stripes.

6. A silver/silver halide reference element characterised by the silver/silver halide electrode of claim 4 or 5 wherein the layer of silver halide has thereon a second layer comprising a metal salt.

7. The reference element of claim 6 wherein the metal salt is a halide of ammonium, an alkali metal, or an alkaline earth metal.

8. An ion-selective electrode characterised

by the silver/silver halide reference element of claim 6 or 7 wherein the second layer (6) comprising a metal salt has thereon a third layer comprising a membrane (7) comprising an ionophore, a carrier solvent and a hydrophobic binder.

9. The ion-selective electrode of claim 8 wherein the metal salt layer (6) further comprises a hydrophilic binder.

10. The ion-selective electrode of claim 8 or 9 wherein the membrane layer (7) has coated thereon a polymeric layer.

11. A halide sensitive electrode characterised by the silver/silver halide electrode of claim 4 or 5 overcoated with a polymeric layer.

12. The halide sensitive electrode of claim 11 wherein the polymeric layer comprises cellulose acetate.

**Patentansprüche**

1. Verfahren zur Herstellung einer Silber/Silberhalogenidelektrode, gekennzeichnet durch teilweise Beschichtung von Silber mit Nickel, Chrom oder einer Legierung von Nickel und Chrom und Behandlung der gesamten, teilweise beschichteten Silberoberfläche mit einem oxidierenden Mittel in Gegenwart von Halogenidionen.

2. Verfahren nach Anspruch 1, dadurch gekennzeichnet, daß das oxidierende Mittel aus $KCrO_3Cl$, $K_3Fe(CN)_6$, $KMnO_4$, $K_2Cr_2O_7$, $NH_4VO_3$, $(NH_4)_2Ce(NO_3)_6$ oder $Fe_2(C_2O_4)_3$ besteht.

3. Verfahren nach Anspruch 1 oder 2, dadurch gekennzeichnet, daß das Silber in Form einer auf einem Träger aufgetragenen Schicht vorliegt.

4. Silber/Silberhalogenidelektrode ein-schließlich eines Trägers (1) mit einer hierauf aufgetragenen Silberschicht (2), dadurch gekennzeichnet, daß auf Teile der Silberschicht eine Schicht (3) aus Nickel, Chrom oder einer Legierung aus Nickel und Chrom aufgetragen ist und daß die nicht derart beschichteten Teile der Silberschicht eine Schicht (4) aus Silberhalogenid aufweisen.

5. Elektrode nach Anspruch 4, dadurch gekennzeichnet, daß die Schicht (3) aus Nickel, Chrom oder einer Legierung aus Nickel und Chrom auf das Silber (2) in Streifen aufgetragen ist.

6. Silber/Silberhalogenid-Bezugselement, gekennzeichnet durch die Silber/Silberhalogenidelektrode von Anspruch 4 oder 5, in der die Schicht aus Silberhalogenid eine zweite Schicht aus oder mit einem Metallsalz aufweist.

7. Bezugselement nach Anspruch 6, dadurch gekennzeichnet, daß das Metallsalz ein Halogenid des Ammoniums, eines Alkalimetalls oder eines Erdalkalimetalls ist.

8. Ionen-selektive Elektrode, gekennzeichnet durch das Silber/Silberhalogenid-Bezugselement von Anspruch 6 oder 7, in dem die zweite Schicht (6) mit oder aus einem Metallsalz eine dritte Schicht mit oder aus einer Membran (7) mit oder aus einem Ionophor, einem Trägerlösungsmittel und einem hydrophoben Bindemittel aufweist.

9. Ionen-selektive Elektrode nach Anspruch 8, dadurch gekennzeichnet, daß die Metallsalzschicht (6) ein hydrophiles Bindemittel enthält.

10. Ionen-selektive Elektrode nach Anspruch 8 oder 9, dadurch gekennzeichnet, daß auf die Membranschicht (7) eine Polymerschicht aufgetragen ist.

11. Halogenid-empfindlich Elektrode, gekennzeichnet durch die Silber/Silberhalogenidelektrode von Anspruch 4 oder 5, beschichtet mit einer Polymerschicht.

12. Halogenid-empfindliche Elektrode nach Anspruch 11, in der die Polymerschicht aus Celluloseacetat besteht oder solches enthält.

**Revendications**

1. Procédé de préparation d'une électrode argent/chlorure d'argent, caractérisé en ce qu'on revêt partiellement l'argent de nickel, de chrome ou d'un alliage de nickel et de chrome, et en ce qu'on traite toute la surface de l'argent ainsi partiellement revêtue par un agent oxydant, en présence d'ions halogénure.

2. Procédé conforme à la revendication 1, dans lequel l'agent oxydant est $KCrO_3Cl$, $K_3Fe(CN)_6$, $KMnO_4$, $K_2Cr_2O_7$, $NH_4VO_3$, $(NH_4)_2Ce(NO_3)_6$ ou $Fe_2(C_2O_4)_3$.

3. Procédé conforme à l'une des revendications 1 ou 2, dans lequel l'argent est appliqué en couche sur un support.

4. Electrode argent/chlorure d'argent comprenant un support (1) revêtu d'une couche d'argent (2), caractérisée en ce que des régions de la couche d'argent sont revêtues d'une couche (3) de nickel, de chrome ou d'un alliage de nickel et de chrome, les régions de la couche d'argent non ainsi revêtues comprenant à leur surface une couche (4) d'halogénure d'argent.

5. Electrode conforme à la revendication 4, caractérisée en ce que la couche (3) de nickel, de chrome ou d'un alliage de nickel et de chrome est appliquée sur l'argent (2) sous forme de bandes.

6. Elément de référence argent/halogenure d'argent, caractérisé en ce qu'il comprend une électrode argent/halogénure d'argent conforme à la revendications 4 ou 5, dans laquelle la couche d'halogénure d'argent est revêtue d'une seconde couche comprenant un sel métallique.

7. Elément de référence conforme à la revendication 6, dans lequel le sel métallique est un halogénure d'ammonium, d'un métal alcalin ou d'un métal alcalino terreux.

8. Electrode sélective aux ions, caractérisée en ce qu'elle comprend un élément de référence argent/halogénure d'argent conforme à la revendication 6 ou 7, dans lequel la seconde couche (6) comprenant un sel métallique est revêtue d'une troisième couche comprenant une membrane (7) contenant un ionophore, un solvant porteur et un liant hydrophobe.

9. Electrode sélective aux ions conforme à la revendication 8, dans laquelle la couche (6) de sel métallique comprend, en outre, un liant hydrophile.

10. Electrode sélective aux ions conforme à la revendication 8 ou 9, dans laquelle la couche membrane (7) est revêtue d'une couche polymère.

11. Electrode sensible aux halogénures, caractérisée en ce que l'électrode argent/halogénure d'argent, conforme à la revendication 4 ou 5, est revêtue d'une couche polymère.

12. Electrode sensible aux halogénures conforme à la revendication 11, dans laquelle la couche polymère comprend de l'acétate de cellulose.

5
3
4
2
1

FIG. 1

5'
7
6
4'
7
6
4'
3'
2'
1'

FIG. 2